# EUROPÄISCHE PATENTSCHRIFT

(11) **EP 1 891 494 B1**
(45) Veröffentlichungstag und Bekanntmachung des Hinweises auf die Patenterteilung: **19.11.2008**
(21) Anmeldenummer: 06754099.7
(22) Anmeldetag: 02.06.2006
(51) Int. Cl.: G05G 5/04, G05G 5/06, H01H 19/11

(54) **BETÄTIGUNGSVORRICHTUNG MIT MITTELN ZUM BLOCKIEREN VON BEWEGUNGEN**
ACTUATING DEVICE HAVING MEANS FOR BLOCKING MOVEMENTS
DISPOSITIF DE COMMANDE DOTE DE MOYENS DE BLOCAGE DE MOUVEMENTS

(30) Priorität: 02.06.2005 DE 102005025826; 09.09.2005 DE 102005042883
(43) Veröffentlichungstag der Anmeldung: 27.02.2008
(73) Patentinhaber: Preh GmbH, 97616 Bad Neustadt a.d. Saale (DE)
(72) Erfinder: KRAMLICH, Andreas, 97424 Schweinfurt (DE)
(74) Vertreter: Thul, Hermann
(86) Internationale Anmeldenummer: PCT/EP2006/005308
(87) Internationale Veröffentlichungsnummer: WO 2006/128725

(56) Entgegenhaltungen:
- EP-A- 1 069 490
- EP-A- 1 484 661
- DE-A1- 3 319 417
- DE-A1- 4 240 298
- DE-A1- 10 304 804
- US-A- 3 757 551
- US-A- 4 026 048
- US-A1- 2005 110 347
- US-B1- 6 404 354
- US-B1- 6 452 119

## Beschreibung

Die Erfindung betrifft eine Betätigungsvorrichtung mit Mitteln zum Blockieren von Bewegungen gemäß dem Oberbegriff des Anspruchs 1.

Solche Betätigungsvorrichtungen sind z.B. in Fahrzeugen eingesetzt, um ein System, z.B. eine Klimaanlage und/oder ein Audiosystem und/oder ein Navigationsgerät zu bedienen. Die Betätigungsvorrichtungen korrespondieren weiterhin z.B. über eine Rechnereinheit mit einer Anzeige. Sie weisen in der Regel eine definierte Haptik auf, die sich mit der Änderung von Schaltzuständen ändern kann, und sind in Form von z.B. Drehknöpfen, Wippschaltern und Joysticks und gegebenenfalls als Kombinationen dieser Mittel bekannt.

Aus der DE 102 34 512 A1 ist eine Betätigungsvorrichtung mit einem Drehknopf bekannt, bei dem zur Realisierung einer Haptik Führungskurven vorgesehen sind, die jeweils eine Rille mit unterschiedlichen Höhen aufweisen. In den Führungskurven übertragen Kugeln eine oszillierende Bewegung auf den Drehknopf.

Die DE 100 22 450 A1 offenbart eine Bedieneinheit zur Steuerung eines Zeigers auf einer Anzeigeeinheit bestehend aus einer Unterschale und einer Oberschale, wobei in der Unterschale eine Sensoreneinheit zur Erfassung der auf die Bedieneinheit wirkenden Kraft angeordnet ist. Eine Steuereinheit wertet die Signale der Sensoren aus.

Blockiermittel sind in diesen Schriften nicht beschrieben.

Teilweise ist es wünschenswert oder erforderlich, z.B. in Abhängigkeit von der Stellung der Betätigungsvorrichtung, einzelne Bewegungsmöglichkeiten einzuschränken, um Fehlschaltungen zu verhindern. Hierfür schlägt die DE 101 20 618 A1 vor, an einer Betätigungsvorrichtung zwei unabhängig voneinander ansteuerbare, auf eine Stellwelle wirkende Anschlagsvorrichtungen vorzusehen, wobei die eine Anschlagsvorrichtung eine Drehung nach links und die andere eine Drehbewegung nach rechts begrenzt. Hierfür ist jeweils ein schellenartiger Ring mit einer Innenverzahnung um einen an der Stellwelle befestigten Ringkörper mit Außenverzahnung angeordnet. Der Ring ist durch einen Elektromagneten so beeinflußbar, dass die Innenverzahnung und die Außenverzahnung entweder in Eingriff sind oder nicht. Diese bekannte Anschlagsvorrichtung erfordert relativ viel Platz und ist verschleißanfällig.

Das Dokument DE 3 319 417 offenbart eine gattungsgemäße Batätigungs vorrichtung Aufgabe der Erfindung ist es, eine Betätigungsvorrichtung mit Mitteln zum Blockieren von Bewegungen zu schaffen, wobei die Vorrichtung einfach und kompakt aufgebaut und dabei robust und unanfällig gegen Störungen ist.

Die Aufgabe ist durch die Merkmale des Anspruchs 1 gelöst. Die Betätigungsvorrichtung umfasst mindestens eine Kugel und mindestens einen zugeordneten Elektromagneten. Die Kugel ist aus magnetisierbarem Material gefertigt. Durch Aktivieren des Elektromagneten mittels Anlegen einer elektrischen Spannung wird die Kugel aus einer Ruheposition in eine Blockierposition gebracht. Dies ist durch eine entsprechende Ausrichtung des Elektromagneten gewährleistet. In der Blockierposition ist die Kugel so zwischen dem ersten Teil und dem zweiten Teil gehalten, dass eine relative Bewegung zwischen diesen in eine bestimmte Richtung unmöglich ist. Z.B. ist das erste Teil ein Gehäuse und das zweite Teil ein Drehknopf, ein Schieber oder ein Kipphebel.

Die Mittel zum Blockieren sind sehr einfach aufgebaut und daher preiswert herstellbar. Kugel und Elektromagnete können sehr klein ausgebildet sein, so dass die Betätigungsvorrichtung auch insgesamt sehr kompakt gebaut sein kann. Sofern die Kugel in ihrer Ruheposition ist, wirken auf das zweite Teil keine durch die Mittel zum Blockieren verursachten Kräfte, so dass die Haptik der Betätigungsvorrichtung hierdurch nicht beeinflusst wird. Ein sogenannter Klebeeffekt tritt nicht auf, weil eine der Blockierrichtung entgegengesetzte Bewegung frei ist und die Kugel durch Deaktivieren des Elektromagneten sofort in die Ruheposition gelangt.

Die Betätigungsvorrichtung ist mit den üblichen erforderlichen Sensoren und/oder Kontakten versehen, so dass die Vorrichtung zum Blockieren einfach entsprechend den Anforderungen programmierbar ist.

Die Unteransprüche betreffen die vorteilhafte Ausgestaltung der Erfindung.

Die Verzahnung und die Aussparung sind einfach beim Herstellen der Teile z.B. durch Spritzguss zu verwirklichen und ermöglichen eine Blockierung, indem die Kugel durch den Elektromagneten zwischen zwei Zähnen gehalten ist. Dabei ist die Verzahnung in Abhängigkeit von dem Durchmesser der Kugel so bemessen, dass ein Teil der Kugel aus der durch die Zahnspitzen gebildeten Ebene herausragt. Dieser Teil der Kugel stößt dann bei einer Bewegung des zweiten Teils an die in Bewegungsrichtung liegende Wandung der Aussparung, so dass eine Weiterbewegung in dieser Richtung verhindert wird. Diese Ausführung eignet sich besonders für die Blockierung von Dreh- und Linearbewegungen.

Eine einzige Kugel mit zugeordnetem Elektromagnet ist besonders einfach und kostengünstig.

Eine Kugel mit zwei zugeordneten Elektromagneten erlaubt die wahlweise Blockierung einer der Bewegungsrichtungen.

Ein Rückstellelement gewährleistet, dass eine Bewegung entgegen der Blockierrichtung frei ist.

Ein Permanentmagnet gewährleistet, dass die Kugel auch bei z.B. Erschütterungen und/oder Fliehkräften sicher in der Ruheposition gehalten ist, wenn der Elektromagnet inaktiv ist. Dieser ist in diesem Fall so bemessen, dass er zusätzlich die Kräfte des Permanentmagneten überwinden kann.

Ein Kipphebel lässt sich besonders einfach und sicher mit Hilfe der Kugel und dem zugehörigen Elektromagneten blockieren.

Bei der versetzten Anordnung der Elektromagnete sind diese näher zu den zugeordneten Kugeln befestigt.

Die Erfindung wird anhand der in der Zeichnung vereinfacht dargestellten Beispiele weiter erläutert. Es zeigen
Figur 1 eine schematisch dargestellte Betätigungsvorrichtung für eine Dreh- oder Linearbewegung mit einer Kugel und einem Elektromagneten in vergrößertem Maßstab,
Figur 2 eine andere schematisch dargestellte Betätigungsvorrichtung für eine Dreh- oder Linearbewegung mit einer Kugel und zwei Elektromagneten in vergrößertem Maßstab,
Figur 3 einen horizontalen Schnitt durch einen Drehsteller mit zwei Kugeln und zwei Elektromagneten,
Figur 4 einen Elektromagneten, bei dem ein Permanentmagnet auf zwei Schenkel eines U-förmigen Eisenkerns wirkt,
Figur 5 eine Prinzipskizze eines Drehstellers,
Figur 6 eine Prinzipskizze eines Linearstellers,
Figur 7 einen Joystick mit Mitteln zum Blockieren und
Figur 8 einen anderen Joystick mit Mitteln zum Blockieren.

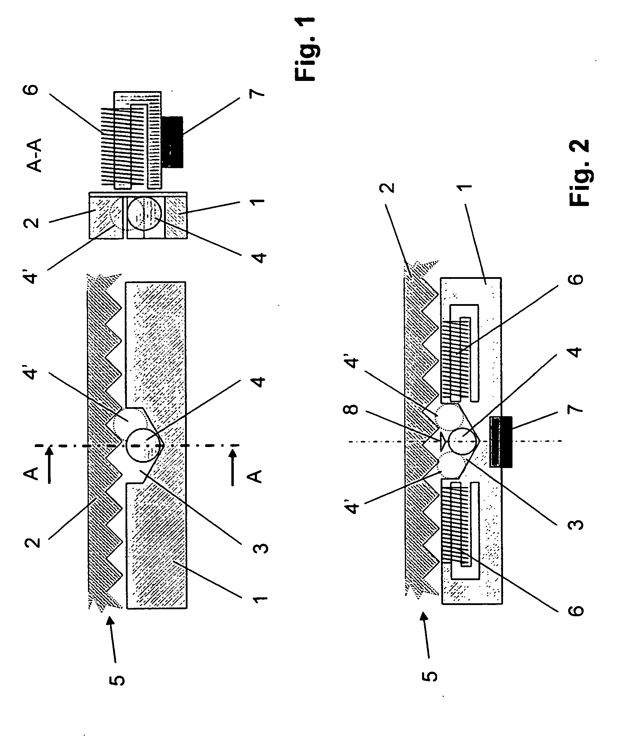

Nach Figur 1 ist ein erstes Teil 1 einer Betätigungsvorrichtung mit geringem Abstand unterhalb eines zweiten Teils 2 so gelagert, dass sich die Teile 1, 2 gerade nicht berühren. Das zweite Teil 2 ist relativ zum ersten Teil 1 verschiebbar.

In dem ersten Teil 1 ist auf der oberen, dem zweiten Teil 2 zugewandten Seite eine nutenförmige Aussparung 3 eingearbeitet. Hierbei ist der Querschnitt der Aussparung 3 V-förmig aus vier Geraden - zwei parallelen Schenkeln und dem daran unten angesetzten V als Basis - geformt. Die Mittel zum Blockieren weisen eine Kugel 4 und einen Elektromagneten 6 auf. Die Kugel 4 ist lose in der Aussparung 3 gelagert. Die Breite und die Tiefe der Aussparung 3 entsprechen jeweils mindestens dem Durchmesser der Kugel 4, die Länge in Bewegungsrichtung der relativen Verschiebbarkeit entspricht hier in etwa dem zweifachen Durchmesser der Kugel 4. Das zweite Teil 2 weist an seiner dem ersten Teil 1 zugewandten Seite eine Verzahnung 5 auf, wobei der Zahnabstand in etwa dem Durchmesser der Kugel 4 entspricht. Wie aus der Schnittdarstellung A-A der Figur 1 ersichtlich ist mittig an einer Längsseite der Aussparung 3 ein Elektromagnet 6 so angeordnet, dass in aktiviertem Zustand das Magnetfeld überwiegend in dem Spalt zwischen dem ersten Teil 1 und dem zweiten Teil 2 wirkt. Ein Permanentmagnet 7 wirkt im Bereich der Basis der Aussparung 3.

Die Betätigungsvorrichtung ist mit nicht dargestellten Sensoren und/oder Kontakten versehen.

Beim Bedienen der Betätigungsvorrichtung in eine Richtung, das heißt, bei einer relativen Bewegung des zweiten Teils 2, wird an einer vorgegebenen Position des zweiten Teils 2 ein Signal ausgelöst, das eine elektrische Spannung zum Elektromagneten 6 freigibt und diesen aktiviert. Hierdurch wird die Kugel 4 aus einer Ruheposition in der Basis der Aussparung 3 in eine Blockierposition zwischen zwei Zähnen der Verzahnung 5 gebracht, wobei ein Teil der Kugel 4 weiterhin aus der Verzahnung 5 in die Aussparung 3 ragt. Mit der weiteren Bewegung der Betätigungsvorrichtung wird die Kugel 4 in der Verzahnung 5 mitgenommen und gegen den entsprechenden Schenkel der Aussparung 3 gedrückt, so dass die Bewegung für diese Richtung blockiert ist, wie durch die punktiert dargestellte Kugel 4' verdeutlicht ist. Durch Tätigen entsprechender Schaltvorgänge und/oder Bewegung des zweiten Teils 2 in die entgegengesetzte Richtung wird die Spannung zum Elektromagneten 6 unterbrochen, so dass die Kugel 4' durch Schwerkraft zurück in ihre Ruheposition gelangt. Letzteres wird durch den Permanentmagneten 7 unterstützt, der unterhalb des Elektromagneten 6 befestigt ist. Diese Abläufe gelten unabhängig von der Bewegungsrichtung.

Ein anderes Ausführungsbeispiel der Betätigungsvorrichtung gemäß Figur 2 unterscheidet sich von dem oben Beschriebenen nur durch Folgendes: In dem ersten Teil 1 ist an jedem Schenkel der Aussparung 3 der Elektromagnet 6, also insgesamt zwei, so angeordnet, dass in aktiviertem Zustand das Magnetfeld in Richtung des zugehörigen Schenkels wirkt. Der Permanentmagnet 7 ist hier unterhalb der Basis der Aussparung 3 befestigt. Die Länge der Aussparung 3 entspricht etwa dem dreifachen Durchmesser der Kugel 4, die Tiefe in etwa dem 1,5-fachen Durchmesser. Mittig zwischen den beiden Elektromagneten 6 ist in der Aussparung 3 ein Rückstellelement 8 mit dreieckförmigem Querschnitt so angeordnet, dass dessen längste Seite mit der Oberkante des ersten Teils 1 in einer Ebene liegt.

Bei dieser Ausführung ist die Funktion abhängig von der Bewegungsrichtung des zweiten Teils 2: Wird das zweite Teil 2 entsprechend der Figur 2 nach rechts bewegt, wird bei Erreichen einer bestimmten Position der rechte Elektromagnet 6 aktiviert, so dass die Kugel 4 in die rechte, punktiert dargestellte Blockierposition 4' gebracht wird. Dies blockiert eine Weiterbewegung des zweiten Teils 2 nach rechts, während eine entgegengesetzte Bewegung nach links auch bei aktiviertem rechtem Elektromagnet 6 weitestgehend frei ist; bei letzterer ist lediglich eine Rasterung durch die Kugel 4, die dann durch das Rückstellelement 8 nach unten gezwungen wird, spürbar. Eine ungewollte Blockierung in die entgegengestetzte Richtung wird mit Sicherheit verhindert.

Wird das zweite Teil nach links bewegt, gilt das eben Gesagte entsprechend mit umgekehrten Richtungsangaben.

In den Figuren 1 und 2 ist die Lage der Betätigungsvorrichtung so dargestellt, dass das erste Teil 1 unter dem zweiten Teil 2 angeordnet ist. Bei entsprechender Anordnung und Auslegung der Permanentmagnete 7 und der Elektromagnete 6 ist jede beliebige andere Lage der Vorrichtung anwendbar.

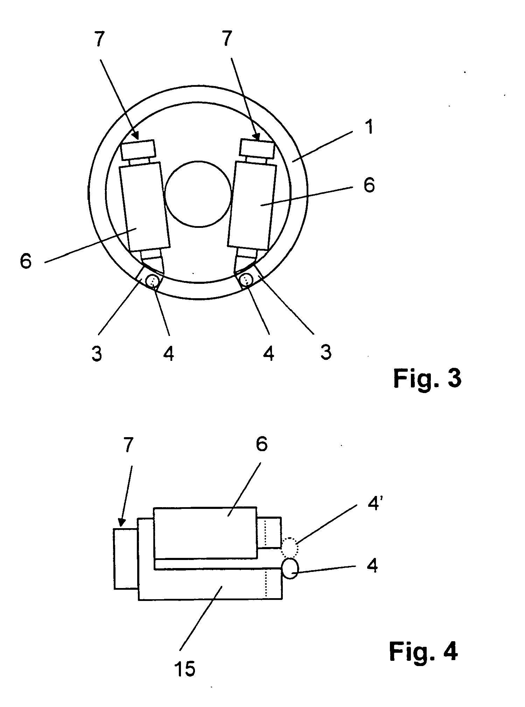

Aus Figur 3 ist ein Drehsteller ersichtlich, bei dem zwei Elektromagnete 6 im ersten Teil 1 angeordnet sind. Jedem Elektromagnet 6 ist eine Kugel 4 und eine Aussparung 3 zugeordnet. Wie aus Figur 4 besonders gut zu erkennen ist, ist der Elektromagnet 6 auf einem der Schenkel eines U- förmigen Eisenkerns 15 befestigt. An der Basis des Eisenkerns, die die beiden Schenkel verbindet, ist außen der Permanentmagnet 7 so befestigt, dass er auf beide Schenkel wirkt. Jeder Elektromagnet ist so in dem ersten Teil 1 befestigt, dass in der Draufsicht die Schenkel des Eisenkerns 15 senkrecht übereinander sind. Auf diese Weise wirkt der Premanentmagnet 7 über den Schenkel, auf dem der Elektromagnet 6 befestigt ist, auf die Kugel 4' in der Blockierposition und über den anderen Schenkel auf die Kugel 4 in der Ruheposition, so dass die Kugel 4 jeweils in einer der beiden Positionen durch den Prmantenmagneten 7 gehalten ist. Der Wechsel von der Ruheposition in die Blockierposition erfolgt durch einen Stromimpuls auf den Elektromagneten 6; der umgekehrte Wechsel erfolgt durch einen Stromimpuls mit umgekehrter Polung.

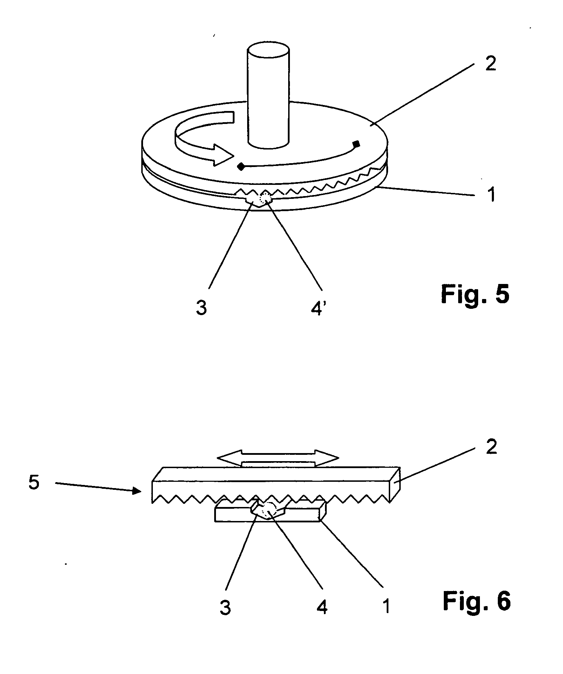

In Figur 5 ist als Betätigungsvorrichtung stark vereinfacht ein Drehsteller gezeigt, der die Einzelheiten nach Figur 1 oder Figur 2 umfasst; der beziehungsweise die Elektromagnete 6 sind hierbei nicht dargestellt. Das erste Teil 1 ist hier eine kreisförmige Scheibe als Teil eines nicht dargestellten Gehäuses, in die in der unmittelbaren Nähe des Rands die Aussparung 3 (zur Verdeutlichung seitlich offen gezeichnet) eingelassen ist. Das zweite Teil 2 ist ebenfalls eine kreisförmige Scheibe mit in etwa gleichem Durchmesser und gehört zu einem Drehknopf. Am Rand des zweiten Teils 2 ist über einen Teilumfang die Verzahnung 5 angeordnet. Die Kugel 4' ist in der Blockierstellung für eine Drehung gegen den Uhrzeigersinn gezeigt.

Aus Figur 6 ist als Betätigungsvorrichtung stark vereinfacht ein Linearsteller gezeigt, der die Einzelheiten nach Figur 1 oder Figur 2 umfasst; der beziehungsweise die Elektromagnete 6 sind hierbei nicht dargestellt. Das erste Teil 1 ist hier eine stabförmige Platte als Teil eines nicht dargestellten Gehäuses, in die die Aussparung 3 eingelassen ist. Das zweite Teil 2 ist eine Zahnstange, die einseitig die Verzahnung 5 aufweist, und gehört zu einem Schieber. Die Kugel 4 ist in der Ruheposition.

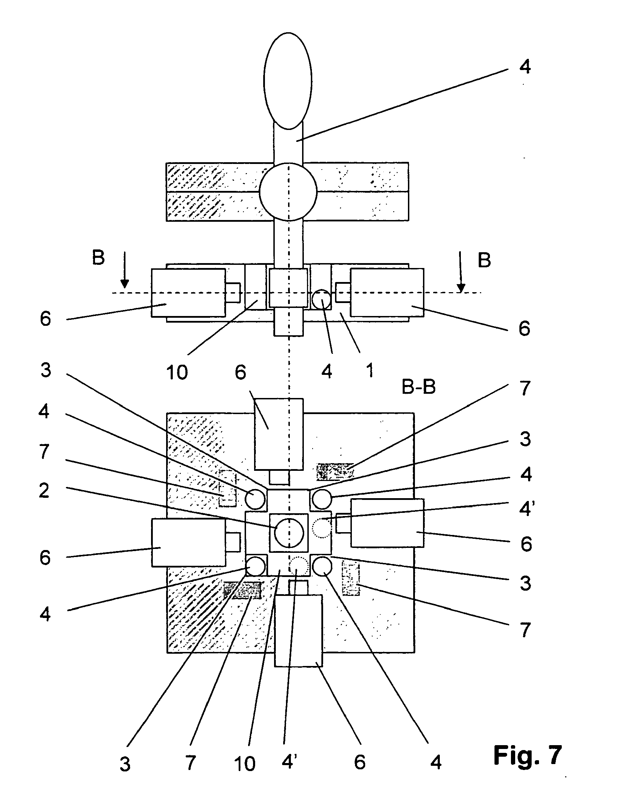

In Figur 7 ist ein Joystick mit Mitteln zum Blockieren dargestellt. Das erste Teil 1 ist hier eine rechteckige Platte, in die eine übliche kreuzförmige Kulisse 10 eingelassen ist. Das zweite Teil 2 ist ein Kipphebel, der wie bei einem Joystick üblich so in dem ersten Teil 1 gelagert ist, dass er innerhalb der Kulisse 10 gekippt werden kann, hier in vier rechtwinklig versetzten Richtungen. Der Joystick ist mit nicht dargestellten Sensoren und/oder Kontakten versehen. An dem ersten Teil 1 sind vier Elektromagnete 6 angeordnet. Hierbei ist jeweils jeder der Elektromagnete 6 so ausgerichtet, dass das in aktiviertem Zustand bestehende Magnetfeld in einem zugehörigen Endbereich eines der Arme des Kreuzes wirkt. Die jeweils gegenüberliegenden Elektromagnete 6 sind parallel zu ihren Längsachsen so versetzt, dass diese versetzt zu den Achsen des ersten Teils 1 sind. Jedem Elektromagnet 6 ist eine Kugel 4 zugeordnet, die bei inaktivem Elektromagnet 6 in Ruheposition in der jeweils zwischen zwei benachbarten Armen des Kreuzes gebildeten Aussparung 3 gelagert ist. Die Aussparung 3 ist z.B. halbkreisförmig ausgebildet, so dass einerseits die Funktion der Kulisse 10 nicht gestört ist und andererseits die Kugel 4 die Aussparung nur in eine einzige Richtung verlassen kann. Jeder Aussparung 3 ist ein Permanentmagnet 7 zugeordnet.

Beim Bedienen des Joysticks wird bei entsprechenden Schaltzuständen und Positionen des zweiten Teils 2 mindestens einer der Elektromagnete 6 aktiviert. Hierdurch wird die zugehörige Kugel 4 - für den rechten Elektromagneten 6 ist das die Kugel 4 oben rechts - aus der Ruheposition in der Aussparung 3 in die Kulisse 10 in der punktiert dargestellten Lage (hier rechte Kugel 4') zwischen dem ersten Teil 1 und dem zweiten Teil 2 gebracht, so dass die Bewegung des zweiten Teils 2 in diese Richtung blockiert ist. Sobald die Schaltung diese Richtung wieder zulässt, wird die Spannung zum Elektromagneten 6 unterbrochen, und der Permanentmagnet 7 bringt die Kugel 4' zurück in die Ruheposition.

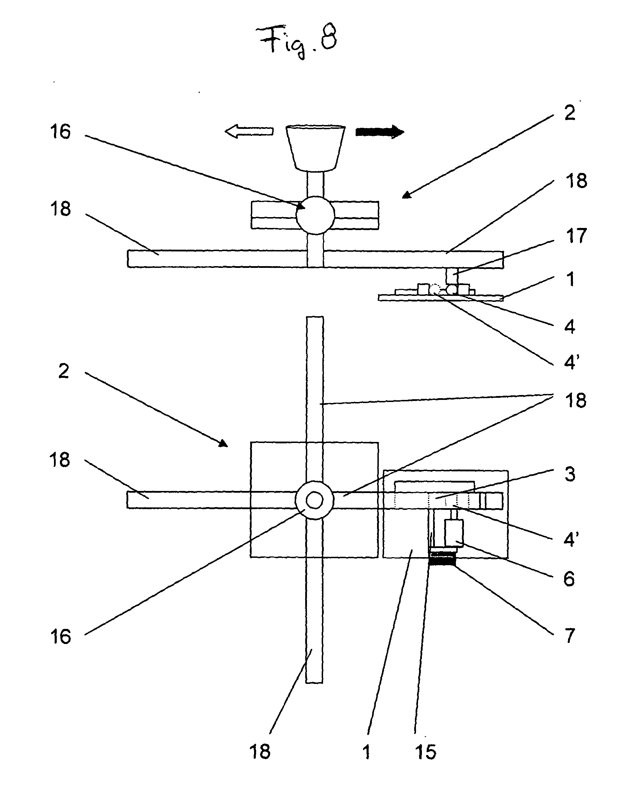

Bei einem in Figur 8 dargestellten Joystick ist der Kipphebel als zweites Teil 2 nicht in dem hier nur teilweise dargestellten ersten Teil 1 gelagert sondern in einem Gelenk 16, das in etwa in der Mitte der Länge des Kipphebels angeordnet und in einem Gehäuse befestigt ist. An einem unteren Ende des Kipphebels sind vier Arme 18 befestigt, die in Form eines rechtwinkligen Kreuzes angeordnet sind, wobei sich die Arme 18 in eine jeweilige Kipprichtung des Kipphebels erstrecken. Jeder Arm 18 weist im Bereich seines äußeren Endes einen zum ersten Teil 1 weisenden Fortsatz 17 auf. Dieser ragt in Richtung der Aussparung 3, die hier unterhalb des Fortsatzes 17 quaderförmig in das erste Teil 1 so eingelassen ist, dass die Längsachse der Aussparung 3 parallel zum zugehörigen Arm 18 verläuft und dass sich ein Ende der Aussparung 3 direkt unter dem Fortsatz 17 befindet und ein entgegengesetztes Ende seitlich des Fortsatzes 17. An einer Längsseite der Aussparung 3 ist der Elektromagnet 6 mit dem Permanentmagnet 7 gemäß Figur 4 angeordnet.

Es wird ausdrücklich darauf hingewiesen, dass in Figur 8 die Mittel zum Blockieren nur für einen der Arme 18 dargestellt sind.

Beim Kippen des Kipphebels gelangt der Fortsatz 17 in die Aussparung 3, sofern die entsprechende Kugel 4 in Ruheposition ist. Sobald eine Kipprichtung blockiert werden soll, wird die Kugel 4 in die Blockierposition 4' gebracht, so dass der Fortsatz 17 beim Kippen in die entsprechende Richtung gegen die Kugel 4' drückt und so diese Kippbewegung verhindert.

## Patentansprüche

1. Betätigungsvorrichtung
mit einem ersten Teil (1),
mit einem relativ zu dem ersten Teil (1) beweglichen zweiten Teil (2) und
mit Mitteln zum Blockieren von Bewegungen wobei die Mittel mindestens eine Kugel (4) und mindestens einen der Kugel (4) zugeordneten Elektromagneten (6) umfassen, **dadurch gekennzeichnet, dass** durch Aktivieren des Elektromagneten (6) die Kugel (4) aus einer Ruheposition derart in eine Blockierposition zwischen dem ersten Teil (1) und dem zweiten Teil (2) verschiebbar ist, dass die Bewegung des zweiten Teils (2) blockiert ist und ein Permanentmagnet (7) so angeordnet ist, dass er in der Nähe einer Basis einer die Kugel aufnehmenden Aussparung (3) wirkt.

2. Betätigungsvorrichtung nach Anspruch 1, **dadurch gekennzeichnet, dass** das zweite Teil (2) an der dem ersten Teil (1) zugewandten Seite zumindest teilweise mit einer Verzahnung (5) versehen ist, dass in dem ersten Teil (1) eine im Querschnitt V-förmige Aussparung (3) eingelassen ist, in der die Kugel (4) gelagert ist, und dass durch Aktivieren des Elektromagneten (6) die Kugel (4) so weit in Richtung des zweiten Teils (2) bewegt, dass die Kugel (4) in die Verzahnung (5) eingreift.

3. Betätigungsvorrichtung nach Anspruch 1 oder 2, **dadurch gekennzeichnet, dass** ein einziger Elektromagnet (6) quer zu der Aussparung (3) und eine einzige Kugel (4) angeordnet sind.

4. Betätigungsvorrichtung nach Anspruch 1 oder 2, **dadurch gekennzeichnet, dass** für jede Kugel (4) zwei Elektromagnete (6) so angeordnet sind, dass jedem Schenkel der Aussparung (3) einer zugeordnet ist.

5. Betätigungsvorrichtung nach Anspruch 4, **dadurch gekennzeichnet, dass** in der Aussparung (3) ein Rückstellelement (8) angeordnet ist.

6. Betätigungsvorrichtung nach einem der Ansprüche 1 bis 5, **dadurch gekennzeichnet, dass** der Permanentmagnet (7) so angeordnet ist, dass er alternativ auf die in der Ruheposition oder in der Blockierposition befindliche Kugel (4) wirkt.

7. Betätigungsvorrichtung nach einem der'Ansprüche 1 bis 6, **dadurch gekennzeichnet, dass** sie ein Drehsteller ist.

8. Betätigungsvorrichtung nach Anspruch 7, **dadurch gekennzeichnet, dass** das zweite Teil (2) eine kreisförmige Scheibe ist, auf dessen äußerem Ring die Verzahnung (5) angeordnet ist.

9. Betätigungsvorrichtung nach Anspruch 8, **dadurch gekennzeichnet, dass** ein Teilumfang der Scheibe mit der Verzahnung (5) versehen ist.

10. Betätigungsvorrichtung nach einem der Ansprüche 1 bis 6, **dadurch gekennzeichnet, dass** sie ein linear verschiebbarer Steller ist.

11. Betätigungsvorrichtung nach einem der Ansprüche 1, 3, 4 oder 6, **dadurch gekennzeichnet, dass** sie Kipphebel ist.

12. Betätigungsvorrichtung
mit einem ersten Teil (1),
mit einem relativ zu dem ersten Teil (1) beweglichen zweiten Teil (2) und
mit Mitteln zum Blockieren von Bewegungen wobei
die Mittel mindestens eine Kugel (4) und mindestens einen der Kugel (4) zugeordneten Elektromagneten (6) umfassen, **dadurch gekennzeichnet, dass** durch Aktivieren des Elektromagneten (6) die Kugel (4) aus einer Ruheposition derart in eine Blokkierposition zwischen dem ersten Teil (1) und dem zweiten Teil (2) verschiebbar ist, dass die Bewegung des zweiten Teils (2) blockiert ist und das zweite Teil (2) ein Kipphebel ist, der in einer auf dem ersten Teil (1) angeordneten Führungskulisse (10) geführt ist, dass jeder zu blockierenden Bewegungsrichtung, die von der Führungskulisse (10) zugelassen ist; eine Kugel (4) und ein Elektromagnet (6) zugeordnet sind und dass durch Aktivieren mindestens eines der Elektromagnete (6) die zugeordnete Kugel (4) aus einer Aussparung (3) in die Führungskulisse (10) zwischen den Kipphebel und den Elektromagnet (6) einbringbar ist.

13. Betätigungsvorrichtung nach Anspruch 11, **dadurch gekennzeichnet, dass** jeder Aussparung (3) ein Permanentmagnet (7) zugeordnet ist.

14. Betätigungsvorrichtung nach Anspruch 11 oder 12, **dadurch gekennzeichnet, dass** vier Elektromagnete (6), wovon sich jeweils zwei in etwa gegenüber liegen, sowie vier Kugeln (4) angeordnet sind.

15. Betätigungsvorrichtung nach einem der Ansprüche 11 bis 13, **dadurch gekennzeichnet, dass** die Längsachsen zweier sich gegenüber liegender Elektromagnete (6) zueinander versetzt angeordnet sind.

16. Betätigungsvorrichtung nach Anspruch 1, **dadurch gekennzeichnet, dass** das zweite Teil (2) ein Kipphebel ist, der in einem Gelenk (16) gelagert ist, wobei an einem Ende des Kipphebels Arme befestigt sind, die sich in die Bewegungsrichtungen erstrecken und die jeweils einen Fortsatz (17) aufweisen, der mit den Mitteln zum zumindest teilweisen Blockieren von Bewegungen zusammenwirkt.

## Claims

1. Actuator device, having a first part (1), having a second part (2) which can move in relation to the first part (1), and having means for blocking movements, wherein the means comprise at least one ball (4) and at least one electromagnet (6) which is assigned to the ball (4), **characterized in that,** by activating the electromagnet (6), the ball (4) can be moved out of a position of rest into a blocking position between the first part (1) and the second part (2) in such a way that the movement of the second part (2) is blocked, and a permanent magnet (7) is arranged in such a way that it acts in the vicinity of a base of a recess (3) which holds the ball.

2. Actuator device according to Claim 1, **characterized in that** the second part (2) is provided at least in part with a toothing (5) on the side facing the first part (1), **in that** a recess (3), which is V-shaped in cross section and in which the ball (4) is mounted, is let into the first part (1), and **in that**, by activating the electromagnet (6), the ball (4) moves in the direction of the second part (2) to such an extent that the ball (4) engages in the toothing (5).

3. Actuator device according to Claim 1 or 2, **characterized in that** a single electromagnet (6) is arranged transversely with respect to the recess (3), and a single ball (4) is arranged.

4. Actuator device according to Claim 1 or 2, **characterized in that** two electromagnets (6) are arranged for each ball (4) in such a way that one electromagnet (6) is assigned to each limb of the recess (3).

5. Actuator device according to Claim 4, **characterized in that** a restoring element (8) is arranged in the recess (3).

6. Actuator device according to one of Claims 1 to 5, **characterized in that** the permanent magnet (7) is arranged in such a way that it alternatively acts on the ball (4) in the position of rest or in the blocking position.

7. Actuator device according to one of Claims 1 to 6, **characterized in that** it is a rotary actuator.

8. Actuator device according to Claim 7, **characterized in that** the second part (2) is a circular disc on whose outer ring the toothing (5) is arranged.

9. Actuator device according to Claim 8, **characterized in that** a partial circumference of the disc is provided with the toothing (5).

10. Actuator device according to one of Claims 1 to 6, **characterized in that** it is a linearly displaceable actuator.

11. Actuator device according to one of Claims 1, 3, 4 or 6, **characterized in that** it is a rocker lever.

12. Actuator device, having a first part (1), having a second part (2) which can move in relation to the first part (1), and having means for blocking movements, wherein the means comprise at least one ball (4) and at least one electromagnet (6) which is assigned to the ball (4), **characterized in that,** by activating the electromagnet (6), the ball (4) can be moved out of a position of rest into a blocking position between the first part (1) and the second part (2) in such a way that the movement of the second part (2) is blocked, and the second part (2) is a rocker lever which is guided in a guide block (10) which is arranged on the first part (1), **in that** a ball (4) and an electromagnet (6) are assigned to each direction of movement which is permitted by the guide block (10) and is to be blocked, and **in that**, by activating at least one of the electromagnets (6), the assigned ball (4) can be moved from a recess (3) into the guide block (10) between the rocker lever and the electromagnet (6).

13. Actuator device according to Claim 11, **characterized in that** a permanent magnet (7) is assigned to each recess (3).

14. Actuator device according to Claim 11 or 12, **characterized in that** four electromagnets (6), of which in each case two are approximately opposite one another, as well as four balls (4) are arranged.

15. Actuator device according to one of Claims 11 to 13, **characterized in that** the longitudinal axes of two electromagnets (6) which lie opposite one another are arranged offset with respect to one another.

16. Actuator device according to Claim 1, **characterized in that** the second part (2) is a rocker lever which is mounted in a joint (16), wherein arms which extend in the directions of movement and which each have a projection (17) which interacts with the means for at least partially blocking movements are attached to one end of the rocker lever.

## Revendications

1. Dispositif d'actionnement comprenant :
une première partie (1),
une deuxième partie (2) mobile par rapport à la première partie (1), et
des moyens pour bloquer des mouvements, les moyens comprenant au moins une bille (4) et au moins un
électroaimant (6) associé à la bille (4), **caractérisé en ce que** l'activation de l'électroaimant (6) permet de déplacer la bille (4) depuis une position de repos dans une position de blocage entre la première partie (1) et la deuxième partie (2), de telle sorte que le mouvement de la deuxième partie (2) soit bloqué, et un aimant permanent (7) est disposé de telle sorte qu'il agisse à proximité d'une base d'un évidement (3) recevant la bille.

2. Dispositif d'actionnement selon la revendication 1, **caractérisé en ce que** la deuxième partie (2) est pourvue, sur le côté tourné vers la première partie (1), au moins en partie d'une denture (5), **en ce que** dans la première partie (1) est pratiqué un évidement (3) de section transversale en forme de V, dans lequel est supportée la bille (4), et **en ce que** l'activation de l'électroaimant (6) déplace la bille (4) dans la direction de la deuxième partie (2) dans une mesure telle que la bille (4) vienne en prise dans la denture (5).

3. Dispositif d'actionnement selon la revendication 1 ou 2, **caractérisé en ce que** l'on prévoit un électroaimant unique (6) transversalement à l'évidement (3) et une bille unique (4).

4. Dispositif d'actionnement selon la revendication 1 ou 2, **caractérisé en ce que** pour chaque bille (4), on prévoit deux électroaimants (6) de telle sorte que chaque branche de l'évidement (3) soit associée à l'un d'eux.

5. Dispositif d'actionnement selon la revendication 4, **caractérisé en ce que** l'on dispose dans l'évidement (3) un élément de rappel (8).

6. Dispositif d'actionnement selon l'une quelconque des revendications 1 à 5, **caractérisé en ce que** l'aimant permanent (7) est disposé de telle sorte qu'il agisse en alternance sur la bille (4) se trouvant dans la position de repos ou dans la position de blocage.

7. Dispositif d'actionnement selon l'une quelconque des revendications 1 à 6, **caractérisé en ce qu'**il s'agit d'un actionneur rotatif.

8. Dispositif d'actionnement selon la revendication 7, **caractérisé en ce que** la deuxième partie (2) est un disque circulaire, sur la bague extérieure duquel est disposée la denture (5).

9. Dispositif d'actionnement selon la revendication 8, **caractérisé en ce qu'**une partie de la périphérie du disque est pourvue de la denture (5).

10. Dispositif d'actionnement selon l'une quelconque des revendications 1 à 6, **caractérisé en ce qu'**il s'agit d'un actionneur déplaçable linéairement.

11. Dispositif d'actionnement selon l'une quelconque des revendications 1, 3, 4 ou 6, **caractérisé en ce qu'**il s'agit d'un levier basculant.

12. Dispositif d'actionnement comprenant :
une première partie (1),
une deuxième partie (2) mobile par rapport à la première partie (1), et
des moyens pour bloquer des mouvements, les moyens comprenant au moins une bille (4) et au moins un électroaimant (6) associé à la bille (4), **caractérisé en ce que** l'activation de l'électroaimant (6) permet de déplacer la bille (4) depuis une position de repos dans une position de blocage entre la première partie (1) et la deuxième partie (2), de telle sorte que le mouvement de la deuxième partie (2) soit bloqué, et la deuxième partie (2) est un levier basculant, qui est guidé dans une coulisse de guidage (10) disposée sur la première partie (1), **en ce que** l'on associe à chaque direction de déplacement à bloquer, qui est permise par la coulisse de guidage (10), une bille (4) et un électroaimant (6), et **en ce que** l'activation d'au moins l'un des électroaimants (6) permet d'introduire la bille associée (4) depuis un évidement (3) dans la coulisse de guidage (10) entre le levier basculant et l'électroaimant (6).

13. Dispositif d'actionnement selon la revendication 11, **caractérisé en ce que** l'on associe à chaque évidement (3) un aimant permanent (7).

14. Dispositif d'actionnement selon la revendication 11 ou 12, **caractérisé en ce que** l'on prévoit quatre électroaimants (6) dont deux sont à chaque fois approximativement opposés, ainsi que quatre billes (4).

15. Dispositif d'actionnement selon l'une quelconque des revendications 11 à 13, **caractérisé en ce que** les axes longitudinaux des deux électroaimants (6) opposés sont disposés de manière décalés l'un par rapport à l'autre.

16. Dispositif d'actionnement selon la revendication 1, **caractérisé en ce que** la deuxième partie (2) est un levier basculant, qui est monté dans une articulation (16), des bras étant fixés à une extrémité du levier basculant, lesquels s'étendent dans les directions de déplacement et présentent chacun une saillie (17), qui coopère avec les moyens pour bloquer au moins en partie des mouvements.
